# EUROPEAN PATENT APPLICATION

(11) **EP 4 318 847 A1**
(43) Date of publication of application: **07.02.2024**
(21) Application number: 23188075.8
(22) Date of filing: 27.07.2023
(51) Int. Cl.: H02J 3/00, H02J 3/14, H02J 3/32, H02J 7/35

(54) **METHOD FOR MAXIMIZING SELF-CONSUMPTION OF ENERGY PRODUCED FROM RENEWABLE SOURCES BASED ON A FORECAST**

(30) Priority: 04.08.2022 IT 202200016680
(71) Applicant: Izi Smart Solutions Società a Responsabilità Limitata, 55100 Lucca (IT)
(72) Inventor: AGOSTINI, Giacomo, 55016 Porcari (IT)
(74) Representative: Emmi, Mario

(57) **Abstract**

The present invention concerns a method for optimizing the electrical energy consumption coming from renewable sources (FV) in a dwelling in general, the method comprising the following steps:
- Determination of an electrical energy consumption in said dwelling in a predetermined time interval (t0) and based on historical data in said time interval;
- Determination of a production of energies from renewable sources present and in use in said dwelling in said predetermined time interval (t0) and based on historical data in said time interval;
- Entry, in an electronic control unit, of one or more utilities (200, 300) present in the dwelling and of which to generate an activation and/or deactivation schedule in a period of time (T) subsequent to that of the determination of said historical data;
- Generation of said activation and/or deactivation schedule of said utilities in said predetermined time interval (T) subsequent to that (t0) of detection of the historical data, said activation and/or deactivation schedule being obtained as a function of:
- Said historical data of energy consumption and production;
- One or more forecast weather data relating to said time interval (T) in which to generate the activation and/or deactivation schedule;
- In such a way that said activation and/or deactivation schedule indicates, within said time interval (T), a series of times and/or time sub-intervals distributed in said time interval (T) in which to be able to activate and/or deactivate one or more of said entered utilities.

## Description

### Scope of the invention

The present invention concerns the technical sector relating to the calculation of consumptions within a residential unit in general, both for office and for housing use.

In particular, the invention refers to a particular system capable of monitoring in a precise manner the consumptions in order to control, in said unit provided with renewable energy sources, how much consumed energy is covered by the produced renewable energies and how much energy is instead used by the electricity grid.

More in particular, the system is not limited only to monitoring the energy consumption of the dwelling and of the production of renewable energy, but primarily it puts in place calculation logics that allow to maximize the exploitation of energy produced from renewable sources, generating and recommending a consumption schedule.

### Brief outline of the prior art

It is known that today many housing units use renewable energy sources, that is, they produce clean energy.

Such renewable energy sources can include, for example, the photovoltaic panels, which are now widespread in many housing units in general. Thanks to the photovoltaic panels it is possible to produce electric current from the energy of the sun and this electrical energy is stored and used to power utilities in general.

Other renewable sources that can be used and/or are used in the dwellings can derive from wind generation that allows electric current to be produced through the wind rotating a wind blade or in any case a rotating element in general.

These dwellings, therefore, certainly have a certain quantity of electrical energy coming from renewable sources that is or can be used for the various domestic utilities.

However, the use of domestic electrical utilities (lights in general, household appliances, air conditioners, etc.) takes place at different times and according to the needs.

An attempt is often made to optimize consumptions but identifying the consumption that is actually carried out is not always easy and it is not as easy to schedule consumptions smartly in order to exploit exclusively or for the most part the clean energy stored without using network energy.

The result, therefore, is that often one has no idea of how much consumption has been made, whereby it turns out that all the energy coming from the renewable source has been used up paying thus dearly in the electricity bill the excess energy consumed and which obviously comes from the grid.

There are some solutions in use that, however, suffer from some limitations, such as the Italian publication 102018000003898.

For example, there are solutions that monitor with precision the energy consumption and the production from renewable sources, but the limit of the current technique is that they are based on monitoring and implementing logics in real time and are therefore not able to predict a long-term estimate.

For example, an example of real-time logic might be:
Building with
   - Photovoltaic panels **(FV);**
   - Sensor to detect the total consumption of the building in real time **(CG);**
   - Sensor to detect photovoltaic production of the building in real time **(PF);**
   - A household appliance (e.g. a washing machine), for example electronically controllable remotely **(L);**
   - A control unit that implements and executes the efficiency logic **(C).**

It is assumed that at a certain time of the day, for example at 12:00 p.m., the sensor **(CG)** reads a consumption of 2 kW against a production detected by the sensor **(PF)** equal to 5 kW. The control unit **(C),** at this point, calculates that the available renewable energy margin is equal to 3 kW, and based on the implemented logic it decides to activate the household appliance **(L)** remotely. Although this solution is functional, the implementation is carried out on the basis of logics that are based exclusively on the instantaneous state of the sensors.

The limit of this management is evident: the atmospheric conditions also vary considerably the production of energy day by day, and with no vision in the future it is impossible to implement "forward-looking" logics. The user who for example has to do about twenty washings a week will not be able to predict a priori what will be the best day to do the laundry and he/she has to hope to be at home at the instant in which the system will notify him/her or her that said instant "is a good time to do the washing".

A household appliance such as the washing machine must in fact be pre-loaded with the clothes and garments to be washed, it must be programmed and the detergent must be prepared. It is clear that in a system that detects a measurement in real time, even having a remote activation system, it is clear that the user must have previously set up everything for an activation with the risk that then, however, the expected activation conditions have not taken place.

### Summary of the invention

It is therefore an object of the present invention to provide a method for scheduling consumptions that allows to maximize the consumption of energy coming from domestic renewable sources.

In particular, the object of the present invention is to provide a method that allows to maximize the consumption coming from the renewable sources, allowing in particular to be able to make a long-term forecast of consumptions and thus allowing to be able to schedule a sequence of switchings on and/or off of utilities in a scheduled manner over time in order to make the most of the renewable sources.

These and other objects are obtained with the method for optimizing the electrical energy consumption coming from renewable sources present in a dwelling in general, in accordance with claim 1.

Said method comprises the following steps:
- Determination of an electrical energy consumption in said dwelling based on historical detection data in a predetermined time interval;
- Determination of a production of energies from renewable sources present and in use in said dwelling based on historical data in said predetermined time interval;

Advantageously, in this way a set of historical reference data relating to energy consumption and production is obtained.
- The method provides, for example in an initial step and for example "one-off", for an entry in a control unit, for example installed on site or virtual such as a cloud system, of one or more domestic utilities (200, 300) present in the dwelling and of which to generate a programmed activation/deactivation schedule;
- Advantageously, therefore, the utilities can be entered only once and then, once they are acquired, the system will work as described below with these utilities. The utilities to be entered can be modified at any time, of course.
- It follows, therefore, a generation of a program of activation/deactivation of said utilities in a predetermined time interval (T) subsequent to that of determination of the historical consumption and energy production;
- Said program (or schedule as the case may be) is obtained as a function of said previously calculated historical energy consumption and production and further function of one or more weather data in the time interval (T) in which to carry out the program, in such a way that the programming indicates, within said time interval (T) relating to the program, a series of times and/or time sub-intervals distributed in said time interval (T) in which to be able to activate/deactivate one or more of said utilities in such a way as to maximize the energy consumption coming from the renewable sources of the dwelling.

In this way, de facto, the activation is programmed in such a way as to draw at least in part on an energy coming from the renewable sources.

In this way an attempt is made to maximize and optimize consumption by taking it as much as possible from the renewable sources.

Likewise, the switching off is programmed to save energy, for example when the renewable source is scarce (for example because the estimate indicates low production due to adverse weather conditions).

In this way a long-term schedule is created, for example of one week, which indicates exactly instants or a time interval in which the switching on of one or more specific utility(ies) will be powered mainly or entirely by energy coming from the renewable sources.

There is therefore a specific function (or calculation algorithm) that depends on the parameters indicated above, i.e. the utilities entered of which to make the consumption schedule, the consumption and energy production log and with the energy production that takes into account the weather conditions.

The calculation algorithm therefore results in a program or schedule, as the case may be, visible on screen, which indicates within the expected frame of time, for example a week, exact times of switching on and/or off of the household appliances or utilities in general in order to switch them on when there is availability of energy from renewable sources and to switch them off when such energy is expected to drop.

This is a consequence of the historical calculation made of the consumptions and energy accumulated in the same historical reference period as well as the weather factors that influence this calculation.

If in a certain time interval there is, at a certain hour of said time interval, an energy surplus, this allows the software program to indicate this time or time slot as suitable for the switching on and use of household appliances and utilities whose consumption is compatible with a surplus of energy produced. Obviously the whole is strongly conditioned by the corrective parameters related to the weather conditions which are important variables to take into account. If, in fact, historically, an energy surplus from available renewable sources is indicated, the corrective factor of the weather corrects this data that could, for example, increase if the weather conditions are favourable or could decrease in adverse conditions.

In any case, this allows, in the long term, to be able to program an optimization of the consumptions coming from renewable sources, minimizing consumptions related to the domestic grid.

It is clear that this solution, in addition to allowing considerable cost savings, has a considerable beneficial impact on the environment.

Thanks to this solution, therefore, all the aforementioned technical problems are solved.

In particular, thanks to detected data of real consumption and of energy production from renewable sources (historical data) together with one or more forecast weather parameters, it is possible to estimate a consumption program.

The calculations of the historical data are carried out in a certain time interval, minute by minute and/or second by second along a certain time frame.

Therefore, this permits to know, in a precise way, instant by instant what on average an energy consumption and production is, for example in a week frame.

Therefore, as a function of the utilities entered in the control unit and their consumptions, the system can easily elaborate a program in which the exact times at which one or more specific household appliances or utilities can be switched on are indicated, the whole also as a function of the weather data.

In fact, being known in a certain time sub-interval how much energy on average is consumed and how much energy is produced, in the case of an energy surplus the system can easily recommend the switching on of a specific utility that is compatible with this energy surplus, thus giving, with good certainty, a consumption schedule over time that guarantees that said consumption is made when there is really availability of energy coming from renewable sources.

Unlike the prior art, detection is not done instant by instant.

The historical data are processed only once to generate, as a function of the utilities entered and their consumptions, a long-term program that can be for example of one day, of a fraction of one day or even of two or more days, for example week, one month or more months.

It is clear that the longer the time interval in which the switching on/off program of the utilities is included and the lower the accuracy.

For example, a historical reference estimate between consumptions and accumulations of energies can be repeated continuously or discretely, for example week by week, in order to generate programs, for example, of a subsequent week with a certain precision.

In this way, in advance, a user has a precise program of switching on/off the utilities.

In particular, having a smart system capable of indicating precisely, in real time, the made consumptions supported by the renewable sources is essential for understanding when consumptions are exceeding such that the consumption of non-renewable energy will start.

Advantageously said utilities may comprise one or more of the following:
- One or more air conditioning plants;
- One or more household appliances;

Advantageously said historical determination of the electrical energy consumption can be made through a sensor (CG) that measures in real time the consumption carried out.

Advantageously, said historical determination of the production of energies from renewable sources can be carried out with a sensor (PF) that measures in real time the energy produced.

Advantageously, said generation of the activation and/or deactivation schedule can be carried out by a specific control unit that receives in input the data coming from said sensors (CG) and (PF) and said one or more forecast weather data, said control unit processing said data according to specific function (f).

Advantageously, the generation of the activation and/or deactivation schedule can be carried out by a specific control unit that receives the historical data and said one or more forecast weather data.

Advantageously, said control unit processes said input data according to specific function (f).

In all cases, advantageously, the control unit can be installed on site or, alternatively, being virtualizable, for example in the cloud.

Advantageously, said generation of the activation and/or deactivation schedule may provide for the entry of one or more utilities through a control panel communicating with the control unit or through a specific mobile device App, in particular in the case of a cloud control unit.

Advantageously, said schedule can be visible on screen and indicates, based on the set time interval, time slot and relative day on which to activate and/or deactivate certain utilities.

The screen can be that of an on-site control panel as well as that of a mobile device in the case of App.

Advantageously, said historical reference data are repeated continuously or at predetermined time intervals.

The invention further relates to an assembly for optimizing the electrical energy consumption coming from renewable sources in a dwelling in general, said assembly comprising:
- At least one first sensor **(GC)** adapted to detect the energy consumptions in real time of the utilities set up in use in said dwelling;
- At least one second sensor **(PF)** adapted to detect in real time an energy production of renewable energy sources set up, in use, in said dwelling;
- A control unit communicating with said first and second sensor in such a way as to receive in input the data measured by said sensors, said control unit further receiving in input one or more weather data;
- And wherein the control unit is programmed to calculate, on the basis of said data received in input from the sensors, a historical reference data of electrical energy consumption and electrical energy production from renewable sources occurred in said predetermined time interval (t0) in which said data were acquired;
- And wherein said electronic control unit is further programmed to acquire in input one or more data relating to one or more utilities (200, 300) present, in use, in the dwelling and of which to generate an activation and/or deactivation schedule over time thereof;
- Said control unit being therefore programmed to generate said activation and/or deactivation schedule of said utilities in a time interval (T) subsequent to that (t0) of detection of the historical data, said activation and/or deactivation schedule being obtained as a function of:
- Said historical data of energy consumption and production;
- One or more forecast weather data relating to said time interval (T) in which to generate the activation and/or deactivation schedule;
- In such a way that said schedule indicates, within said time interval (T), a series of times and/or time sub-intervals distributed in said time interval (T) in which to be able to activate and/or deactivate one or more of said entered utilities.

Advantageously, the control unit estimates the times and/or the time sub-intervals in which it has been verified that there is an energy surplus and wherein, based on the calculated energy surplus and the consumptions of the entered utilities, it indicates in a report which utilities to activate and/or deactivate in the time interval.

The present invention also relates to a system for optimizing the electrical energy consumption coming from renewable sources in a dwelling in general, said system comprising:
- A dwelling provided with one or more utilities in general;
- An assembly according to one or more of the above characteristics.

### Brief description of the drawings

The invention, in one or more of the embodiments thereof, will be detailed below in accordance with the following drawings:

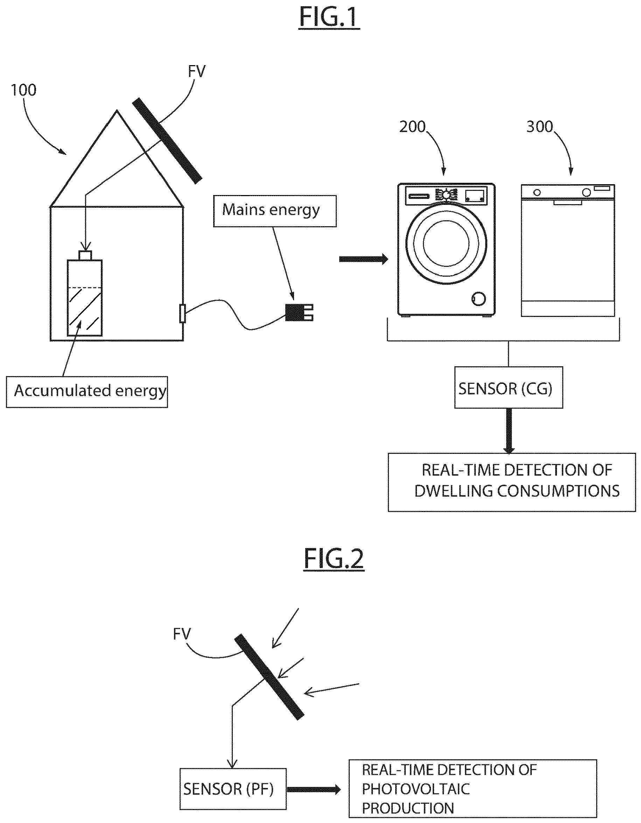

- Figure 1 schematically shows a dwelling 100, therefore a local unit in general, with one or more photovoltaic panels (FV) that produce a certain energy quantity schematized with the storage battery. The Figure then highlights an electrical outlet to indicate the mains energy; again Figure 1 schematizes some household appliances (200, 300) and the sensor (CG) that reads and detects the consumptions of the dwelling in real time;
- Figure 2 schematizes the photovoltaic panels (FV) irradiated by solar rays and therefore in energy production condition; Figure 2 schematizes the sensor (PF) that detects the energy production in real time;

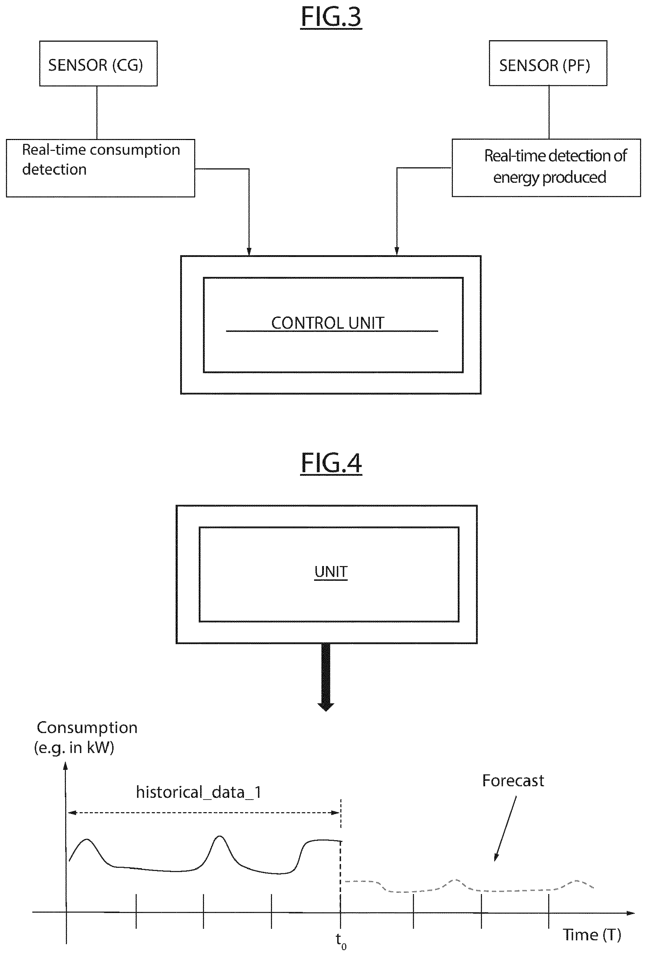

- Figure 3 schematizes the control unit that receives in input the measurements of the sensors (CG) and (PF);

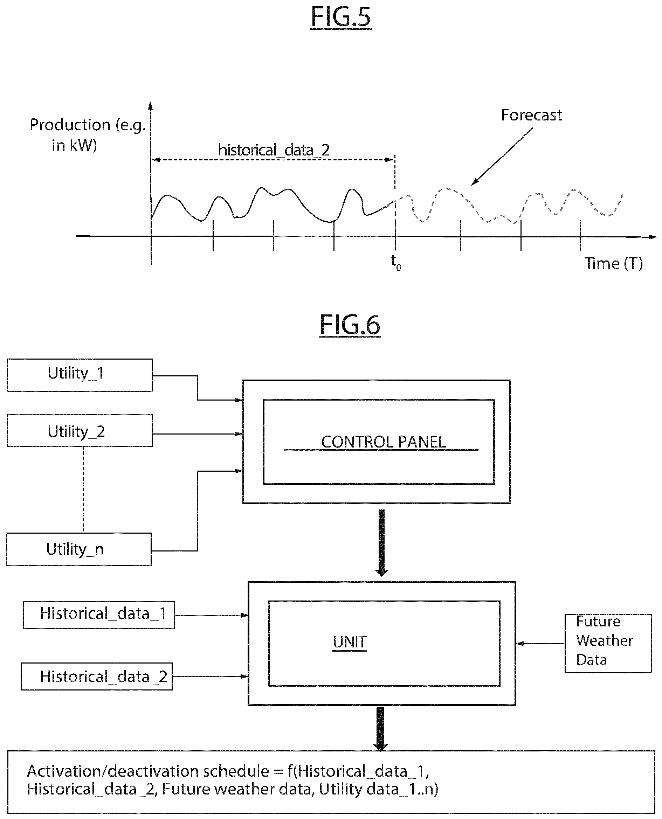

- Figure 4 and Figure 5 schematize a graph to highlight the historical data (historical_data) of energy consumption and production that are processed by the control unit as a function of the input data received through the measurements of the sensors (CG) and (PF); the Figures show, in fact, on a Cartesian graph, a reference historical data until a time t0 which is then followed by the calculation after the time t0 subject-matter of invention and which is based, in part, on the historical data (the part subsequent to t0 indicated as a forecast);
- Figure 6 further schematizes the control panel through which all the utilities and their specifications can be manually entered (e.g. dimensions/powers, etc.); the figure shows how these data are transferred to the control unit that has processed the historical data of energy consumption and production and that further receives the weather data in input in order to elaborate a schedule of the uses of the household appliances according to a certain forecast time program that is a function of said input data, i.e. the utilities entered, the historical data and the weather data;

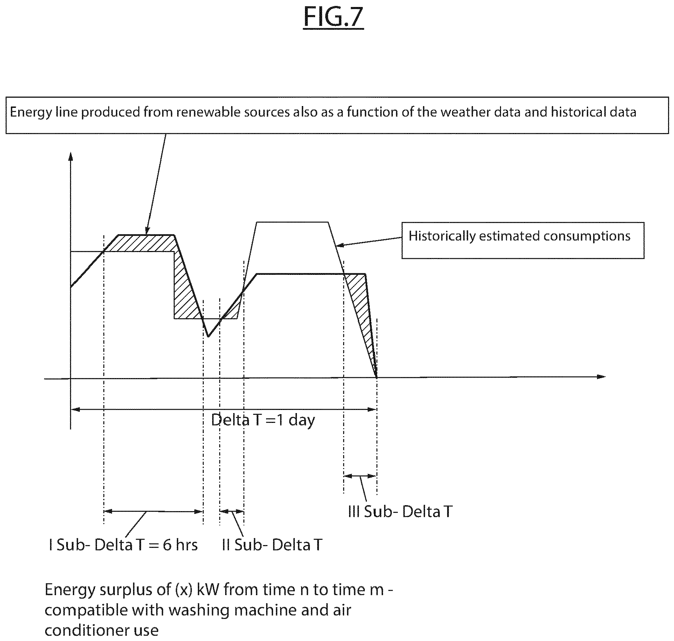

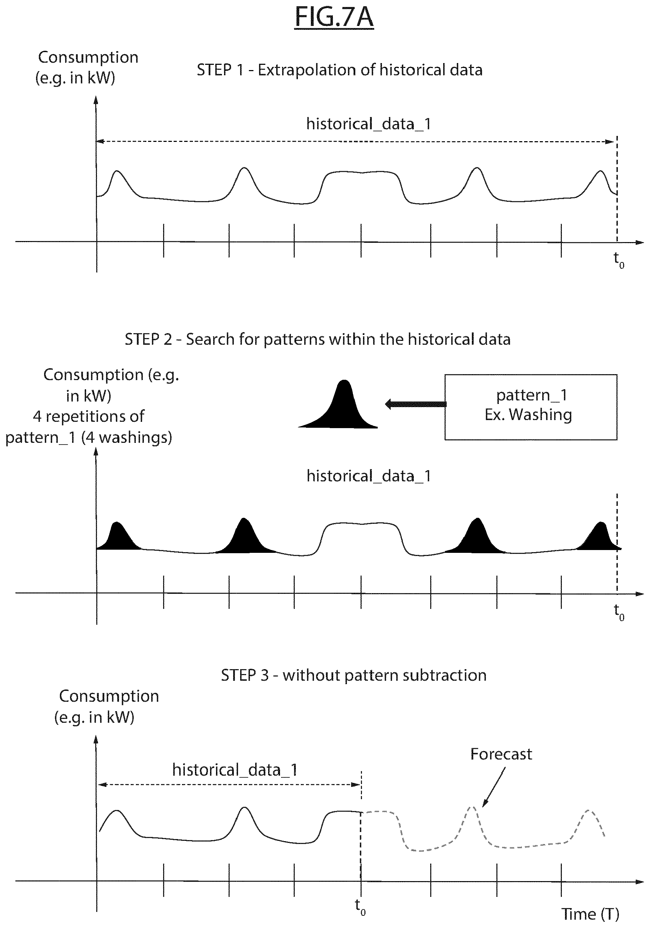

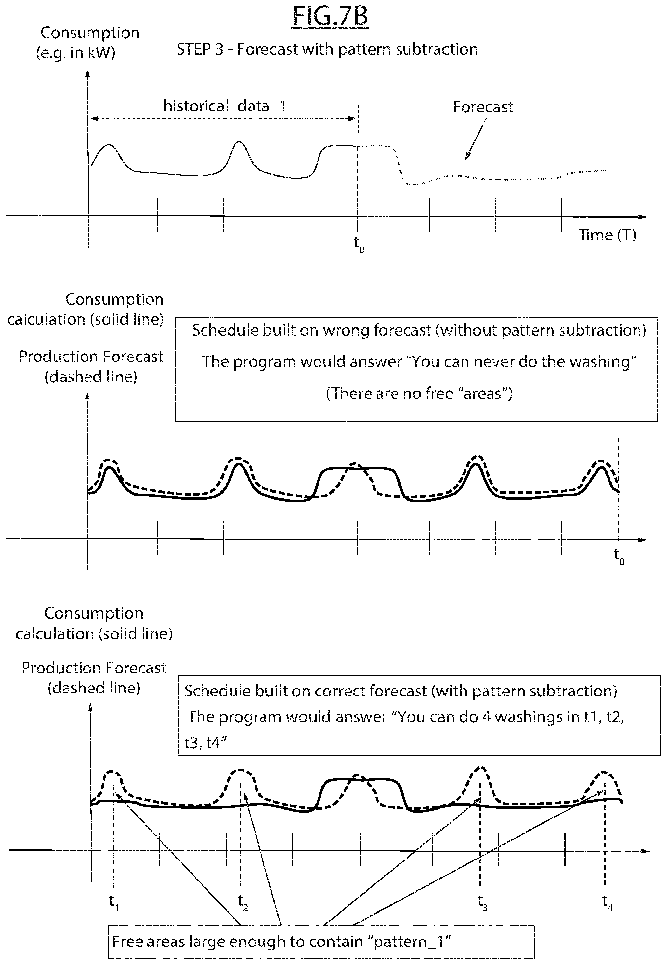

- Figure 7 schematizes in a graph an example of one-day programming highlighting an area of consumptions estimated historically over a time frame and, in the same time frame, a graph of the renewable energy produced historically together with the correction of the weather, in order to highlight with solid colour the area of energy surplus that one can have in certain time intervals; in this way, the household appliances that one wants to use being known, in particular precisely those introduced in the control panel and their consumptions being known, the processor can easily implement a time program in a certain period of time indicating if and which household appliances to use and the relative time of use recommended, in order to make the most and best use of the energy surplus; so if some household appliances have a too high consumption in the specific time interval, the program selects the use of others entered in the list that are compatible with the energy surplus;
- Figure 7A and 7B finally show some graphs suitable for understanding an implementation aspect of the calculation that is performed.

### Detailed description of the invention

The object of the invention refers to an innovative method capable of generating a forecast of the production of the domestic renewable energy sources and a forecast of the consumptions of the building in question. On the basis of this forecast, the system in question can then proceed to calculate the best way to use the household appliances within the forecast window, so as to maximise the self-consumption of renewable energy.

The forecasting system, therefore, has the great advantage of allowing a user to have in advance an estimate of times and/or days in which to be able to carry out certain operations, so allowing him/her to be able to best manage himself/herself also based on his/her plans and presence in person at home.

As per Figure 1, a dwelling 100 is therefore schematized having, by way of an example, energy accumulated by solar panels (FV) in addition to energy that is instead related to the normal mains electricity grid.

As schematized in Figure 1, a part of energy is therefore accumulated from such renewable sources, i.e. the photovoltaic panels (FV) while another part of energy can come from and is available from the normal electricity grid.

The household appliances and all the domestic utilities have a predetermined consumption.

Figure 1 in fact schematizes some household appliances including, by way of a not absolutely limiting example, a washing machine 200 and a dishwasher 300.

In accordance with the invention there is therefore a first sensor **(GC)** which is connected, and therefore communicating, with the domestic utilities. The sensor **(CG)** is therefore configured to detect and/or store a consumption of the utilities.

The utilities shown in the schematization of Figure 1 are obviously only a non-exhaustive and non-limiting example.

In accordance with Figure 2, the dwelling is also provided with renewable type energy production systems (FV) including, by way of a non-limiting example, photovoltaic panels (FV) (one or more than one).

It is clear that, in accordance with the invention, the photovoltaic panel is only an example since the dwelling can in fact include as an alternative or in addition to the panels other systems, such as for example wind systems.

In all cases, regardless of how many and which renewable energy production systems are present, in accordance with the invention there is a sensor **(PF)** which is connected to such renewable energy production systems in order to detect and/or store in real time the energy production that is actually made.

The system therefore makes it possible to monitor and maximize a consumption that comes from the renewable sources.

In particular, the specifically programmed system performs certain calculation operations that allow a forecast to be made over a certain time frame.

Assuming therefore the presence of the aforementioned photovoltaic panels **(FV),** these are connected to the sensor (PF) to detect and thus to measure the photovoltaic production in real time (and/or any other renewable sources if present).

Then there is the sensor **(CG)** to detect the overall consumption of the building in real time.

In a first step, historical data relating to the consumptions are extrapolated, taking advantage of the real-time measurements detected by the sensor (GC) and, also, historical data relating to the renewable energy produced through the real-time measurements of the sensor (FV).

Figure 3, for this purpose, schematizes a control unit.

The control unit, as is well known, is provided with a specific programmed/programmable processor.

The processor is of course specifically programmed in accordance with what is described below.

As schematized by Figure 3, the control unit (also called simply "unit") receives the measurement data in real time coming from the sensors, in particular from the sensor (CG) that detects in real time the consumptions of the dwelling and from the sensor (FV) that detects the amount of renewable energy produced by the energy systems installed in the dwelling in question (for example solar panels and/or wind energy and/or other possible systems in general).

In a first step, therefore, the processor is able to create a log of the consumptions and a log of the energy produced in a certain time interval (t0).

More in particular, as schematized by Figure 4, the real-time measurements of the sensor (CG) allow the processor to create a data-log highlighting a consumption over a certain time frame, for example estimated on one week (historical_data_1). The data-log therefore contains, instant by instant, in the predefined time frame, a log of energy consumption.

The methodologies for calculating an average consumption, based on the real-time measurement data coming from the sensor (CG) can obviously be different and the person skilled in the art will be able to implement the calculation algorithm that he/she deems the most suitable.

In any case, as schematized in Figure 4, a data-log of data is then extrapolated indicating a consumption trend measured over a certain time frame, for example as said one week.

Obviously, although not schematized in the figure, the consumption measurement can be calculated precisely over any time frame.

From the schematization of Figure 4 it is therefore evident, by way of example, a calculation of consumptions in a week frame in which some peaks, evidently, show an extra measurement of consumption linked to a certain habit of life of the subject, for example because at certain moments of the day he/she uses more predetermined household appliances.

Similarly, as per schematization in Figure 5, the control unit performs a measurement of energy production by the renewable sources in a predetermined time frame, preferably the same previous time interval (historical_data_2).

So, historical data of energy consumption and production are determined in a certain historical time interval which, preferably, is the same for both of the aforementioned measurements.

In particular, the data-log **[historical_data_1]** indicates, instant by instant, an energy consumption calculated over a certain time frame (0-t0) while the data-log **[historical_data_2]** indicates instant by instant the calculation of the historical energy production of the renewable sources in the same time frame (0-t0).

Historical data_2 and historical data_1 also take into account, of course, the structural parameters of the utilities and renewable energy sources.

On the basis of said generated historical data, a forecast of the future instantaneous consumption values over a settable time horizon, for example one week, is then generated.

Figure 4, as said, schematizes a graph of instantaneous consumptions that has been hypothesized by the processor on the basis of the data extrapolated by the sensor (CG).

The sensor PF, in turn, is the sensor that reads the consumptions related to the renewable source, such as for example one or more photovoltaic panels and from which the estimate of Figure 5 follows. It is therefore possible to create, also in this case and as schematized in Figure 5, a time horizon of instantaneous values of production of current by the plant(s) in question. This can obviously take into account the structure and the type of plant in question (therefore, for example, number and power dimensions of the solar panels) .

For example, the time horizon for the historical calculation can be one week.

In this way, as schematized by Figures 4 and 5, there are two temporal calculations based on historical data.

One is that of the building's consumption and therefore how much the utilities generally consume over a certain time frame and the other is how much the renewable energy production again over a fixed time frame is, for example one week.

A particularly innovative element of the invention consists further in the fact that the calculation system (therefore the calculation function as a whole) integrates and also takes into consideration the meteorological forecasts including, for example sun, winds and/or temperatures.

In fact, it is known that the solar panels produce energy as a function of the solar rays from which they are hit. It is therefore known that the energy production is strongly influenced by the weather conditions since a rainy day leads to a very low energy production compared to a hot and sunny day condition.

The same is true for the wind, in case for example wind systems are present among the renewable energy production systems.

That said, therefore, the calculation algorithm that generates the consumption program, i.e. the consumption schedule, is based not only on the previous historical data inherent in energy consumptions and production, as indicated above, but also as a function of the weather estimates.

The control unit can therefore be connected, for example through the internet, to weather information sources that in real time continuously or at predetermined time intervals, send parameters correlated to the presence or absence of the sun, the temperatures and the presence or absence of the wind as well as any other detectable weather parameters (for example humidity).

The calculation algorithm therefore takes into account these parameters which acquire a certain weight in the calculation function.

The fact that, for example, it is envisaged in the frame of time of which the calculation of the program is carried out (for example one week) sunny time and strong wind allows to estimate a consumption program in a more precise way through for example corrective factors that in the formula of the function can be entered and that result in an increase of the available energy possibilities. On the contrary, low wind and/or rain or overcast sky lead(s) to a corrective factor that certainly decreases energy availability thereby modifying the program.

It is obvious that the calculation function can be any and the person skilled in the art will be able to find the one most suitable for his/her case.

Figure 6 overall schematizes the inputs and outputs.

Starting from said forecasts not only of the weather but also of the energy consumptions and production introduced above, the processor is now able to generate a "Consumption Schedule" over a set time horizon, for example one week and obviously after the time interval on which the historical estimate was made.

In particular, it is possible to enter, for example from the control panel, all the utilities present in the dwelling with their relative consumption.

Figure 6 schematizes a control panel normally present for this type of plants.

It is managed electronically and is provided with a panel through which to read the data and/or relative pushbutton panel for data entry.

The panel therefore allows entering the utilities in general (e.g. refrigerator, iron, etc.).

The control panel communicates with the control unit that processes the estimate calculation.

In particular, Figure 6 therefore shows the utilities from 1 to n that can be entered in the control panel and of which a program of use over time is to be drawn up.

Of course, the relative consumptions of each utility can be entered.

For example, the control panel can already envisage a list of utilities, divided by brand and model, which can be selected by the user and which therefore already contain as preset all the consumption values necessary for the calculation described below.

The user can then select, for example, his/her type of air conditioner that he/she have installed, his/her refrigerator etc. by checking it from a predefined list.

Said consumption data of the entered utilities are therefore acquired by the relative control unit with its processor which, through the historical estimates previously introduced, can therefore easily implement a consumption forecast calculation.

In particular, the historical data processed and the weather data together with the characteristics of the entered utilities allow the creation of a calculation function.

The invention is therefore a strategy, implemented by a control unit present within the dwelling, which has as output a "consumption schedule" over a defined and settable time horizon.

An example of a consumption schedule (of one week, generated on Sunday for the subsequent week) can for example be:
**Monday:**
   - at 8:34 a.m. switching on air conditioner in the living room
   - at 9:02 a.m. switching on washing machine
   - at 9:58 a.m. switching on air conditioner in the kitchen
   - at 10:45 a.m. switching off washing machine
   - at 10:56 a.m. switching on tumble dryer
   - at 12:03 p.m. switching off tumble dryer
   - at 2:34 p.m. switching off air conditioner in the living room
   - at 3:25 p.m. switching off air conditioner in the kitchen
**Tuesday:**
   - at 8:43 a.m. switching on air conditioner in the living room
   - at 9:24 a.m. switching on washing machine
   - at 9:54 a.m. switching on air conditioner in the kitchen
   - at 10:23 a.m. switching off washing machine
   - at 10:44 a.m. switching on washing machine
   - at 11:56 a.m. switching off washing machine
   - at 12:43 a.m. switching on tumble dryer
   - at 13:42 p.m. switching off tumble dryer
   - at 3:24 p.m. switching off air conditioner in the living room
   - at 4:45 p.m. switching off air conditioner in the kitchen
   and so on until Sunday.

In fact, knowing a consumption in the dwelling and knowing a production of renewable energy over a time frame, it is easy, as per schematization in Figure 7, to be able to identify the areas where there may be an energy surplus related to the energy production from renewable sources as a function of the weather conditions and areas where, instead, the amount produced from renewable sources is lower than the value of carried out consumption. From this, consequently, the processor can therefore give as output a consumption program aimed at optimizing, by time slots, the consumption coming from renewable sources being statistically known, as a function of historical consumptions, the historical average quantity of renewable energy produced.

The graph of Figure 7, in two different colours, shows in fact by way of example the line that delimits the area of the estimated consumptions and with orange colour the line that delimits the area of the energy produced also influenced by said weather conditions, indicating with solid colour the areas of energy surplus produced by the renewable energies with respect to the consumptions.

The example of Figure 7 shows an estimate of a day but, of course, the estimate can be made over a longer time, generally a time compatible with the program it is wished to generate, for example one week if the program it is wished to carry out runs from week to week.

Always in accordance with Figure 7, some traits, called sub-delta, in which there is an energy surplus, are highlighted in solid colour. Figure 7 shows three of them by way of example and in the first one, by way of example, it has been indicated an energy surplus lasting six hours.

In this way, the program is able to estimate, instant by instant, the time intervals in which there is an energy surplus which is also quantified as the difference between consumption and energy produced.

Therefore, the consumptions of the entered household appliances being known and being known for some of them also other parameters, such as the operating time as it can be for the dishwasher, the system is able to estimate if and which ones among the household appliances can be used and which, instead, to deactivate, in accordance with the example of program given above.

In this way the user has in advance a program of times and days (for example weekly) in which he/she knows she/he can switch on certain household appliances and/or switch off others and can therefore follow the indicated schedule both manually and remotely.

It can be carried out manually in all dwellings where the utilities require an in-person activation (for example, in a washing machine that must be pre-loaded with the clothes to be washed, the detergent must be inserted and only after these steps it can be started remotely).

Additional utilities, such as air conditioners, can also be controlled via the App at a distance (therefore remotely) and therefore a communicative interface with this system that allows an automatic activation of all controllable utilities at a distance (remotely) according to the indicated program is not ruled out.

If, for example, in the weekly programming frame that is issued the user checks what are the days and times of recommended activation of the washing machine, he/she can safely, from time to time, prepare in advance the load and then enable the program, remotely, to activate the washing machine.

The same applies for the dishwasher or other utilities in general.

As mentioned, the user can see the "consumption schedule" on a possible display on the control panel of the control unit or through an App usable from PC or mobile phone device.

The user can also decide whether to use the "consumption schedule" as a guideline, manually implementing the scheduling, or allow the control unit to act for him/her, which will switch on and off the devices directly by communicating with them through an electronic remote control.

The forecast-based system, in addition to the already exposed advantage of transmitting awareness to the user of what the future activations will be and when they will occur, bases the scheduling on optimization over an extended time horizon.

To clarify what is described above, it is indicated that the historical data is implemented from time to time.

The historical consumption data can easily identify exactly the consumption habits of the user as the consumption "patterns" clearly indicate which household appliance or utility is consuming and how much and for how long. The historical data, therefore, in addition to detecting consumption is able to easily provide information on the type of household appliance or utility in general that consumes and how often.

In other words, the forecast program is based on a historical data that, automatically, knows the number of activations/deactivations of the utilities and generates a program that is based and allocates these utilities in the best possible way according to their frequency of use.

For example, the historical data is able to detect how many washings can be done in a week (for example twenty) and therefore in the program it allocates said twenty washings in the best way.

This is because the analysis of the consumptions allows to highlight consumption patterns that are easily identifiable utility by utility, being different from one another.

Therefore, the log also serves to replicate a program of use according to the historical frequency detected.

That said, it is clear that the historical data is updated with a certain periodic frequency or continuously since the historical data, per se, changes both as a function of the weather data and as a function of the habits of the user. Therefore, the function that estimates and generates the schedule of use is a function that acquires in input historical data that from time to time are different and can be updated periodically.

By automatically acquiring, for example, the statistical data that the user needs about twenty washings per week, the system will concentrate the greatest occurrence near the days when greater production is expected. With regard to air conditioning, which alone takes up about 80% of the energy consumption of a dwelling, the advantage of working with forecast is tangible and derives from the possibility of being able to forecast and compensate for the days of low production with the days of greater production, for example: tomorrow it is sunny, in two days it is rainy and in three days it is sunny again: the system, in its scheduling will provide for a greater accumulation in its program on the sunny days in order to, for example, recommend a use of the energy accumulated on a rainy day.

As mentioned above, in order to optimise accuracy, the statistical calculation indicated above based on the consumptions and on the energy production can obviously be repeated from time to time in such a way as to improve accuracy.

This is not only due to the fact that some "habits" can change over time but also as a function of the seasons where, obviously, there is greater and/or lesser consumption as well as greater and/or lesser energy production.

For example, in the summer period there is a greater consumption of air conditioning but there is also a greater accumulation of solar energy.

Reactivating each time, in predetermined time intervals, a repetition of the calculation for the estimation of the historical reference data allows the made estimation to be precise.

Figures 7A and 7B show an example of calculation.

Starting from a calculation of the consumption (historical_data_1) in a certain period of time (0-t0) the system as mentioned recognizes the consumption patterns entered by the control panel and of which to make the schedule, for example the washing machine or other household appliances, as these have repeated occurrences over time and which can be easily traced back for example also knowing the brands and models of the utilities.

It should also be noted that the control panel allows the entry of only and exclusively some utilities, i.e. those and only those whose consumption schedule is wished to/must be made while other utilities cannot be entered no matter what because they are not predictable in their use or in any case not programmable.

For example, in accordance with the invention the kitchen household appliances such as oven and/or induction cookers for the kitchen cannot be entered, as well as the hair dryer.

It is not possible to indicate and oblige the user to cook at a time at night or to dry his/her hair at night.

Some utilities are therefore excluded.

The subtraction of the patterns is therefore only for those utilities entered by the user to realize the program or schedule as the case may be.

Figure 7A, in step 2, shows the search and the recognition of the example pattern of the washing machine and in any case of all and only those patterns relating to the only utilities entered by the control panel and of which the schedule is to be made.

Step 3 of Figure 7A and 7B shows the forecast in the case of no pattern subtraction (incorrect case) and in the case of pattern subtraction (correct case).

If the recurring pattern (in the example of the washing machine) is not subtracted from the historical data of consumption, the final forecast (also a function of the historical estimate of the energy produced and the weather data) is not true and would therefore lead to a forecast such as that of Figure 7A step 3 with consequent calculation of the consumptions and the energies produced, as a function also of the weather forecast, which would risk not presenting any possible free allocation area (see Figure 7B "Schedule built on the wrong forecast (without pattern subtraction)". Figure 7B "Schedule built on the wrong forecast (without pattern subtraction)" shows in fact the calculated line of the consumptions and that of the energy produced also dependent on the weather conditions and the two curves almost overlap, thus indicating the impossibility of allocating the use of the utilities.

The correct procedure, therefore, provides, from the historical estimate of consumption, for the subtraction of the patterns relating to the utilities entered in the control panel and of which to generate the program (in the example of the figure only the washing machine but could be a washing machine and other utilities).

Figure 7A, step 2, shows such subtraction.

At this point, as shown in Figure 7B case "Schedule built on correct forecast (with pattern subtraction)" a correctly lower consumption line is highlighted compared to a final energy production line that is a function of the historical data but also of the weather forecast.

In fact, having subtracted the consumptions linked to the utilities of which the schedule is to be made implies that the calculated consumptions are only the historical ones actually carried out by all and only those utilities not entered in the control panel as it is not of interest to the user (he/she does not want to enter them) or cannot be entered no matter what. In fact, it is recalled that some utilities cannot be entered, in particular all those a program of use thereof cannot be made such as the utilities for cooking, hair dryer etc.

The final result of the two overlapping graphs is, in this case, the presence of areas with possible energy surplus (obviously a function of the weather conditions) in which to allocate the consumption of the entered utilities in order to power them as much as possible with renewable energy sources.

In the example of Figure 7B there are therefore indicated the "free areas" calculated and which would be big enough to contain an example pattern_1.

This implies, as described above, that the activations / deactivations of the utilities entered in the control panel are allocated as a function, thus, of the dimensions of the free areas calculated (amount of energy surplus) which must be compatible (as can be inferred from Figure 7B) with the known consumption of these utilities (since as mentioned above for each utility it is known a priori its consumption which, consumption, in fact, is subtracted from the historical data).

Therefore, being the consumptions of the utilities entered known, these are allocated in the most suitable surplus areas.

As can be inferred from Figure 7B, said activation and/or deactivation schedule is a function of the areas of energy surplus and function of the known consumptions of the utilities. In this way, the system appropriately allocates the activations of each utility in the most suitable areas.

Without prejudice to all the above, in any case the calculation function will best allocate the switching on/off times of the utilities so that they are powered as much as possible by the renewable sources.

Obviously, the optimization can also result in a partial power supply with mains current but, in any case, everything described so far is aimed at best maximizing the use of energy from renewable source.

It should be specified that the remotely controllable electronic household appliances can be of various kind, such as washing machines, dishwashers, water heaters, air conditioners, heat pumps, but in general the common thread is that all these devices must produce a result within a predefined time. However, there are also devices that cannot be included in the consumption scheduling strategy, and they are all those devices whose use has an intrinsic component of randomness in the moment of need, such as television (and in general all devices in the entertainment world), the oven or the cooking hob. One of the foundations of the present invention is the maintenance or even the improvement of the comfort, and for this reason, of course, the utility use program tends preferably to exclude some household appliances such as an electric oven, hair dryer and all those utilities that have a non-regulatable random use.

In all the configurations of the present invention, without prejudice to all that has been described, the control unit may also not be installed directly in the dwelling but may possibly be "in the cloud".

In this case, for example, the control unit can be in the form of a server reachable on the Internet and with the sensors that send the data to that specific server that carries out the processing described.

In this case, for example, the "remote" control unit, in the cloud, has a virtualised control panel through mobile Apps or other similar systems such as PCs.

The system in all the configurations described, in particular in the latter with virtual control unit, therefore lends itself well to an application (App) for mobile devices, such as mobile telephony devices.

In the present description, the term dwelling means a building or a room in general for house and/or office use or rooms in general for industrial use (an industry) and/or for warehouse use and/or for commercial use and in any case any type of building/construction/room in the broad sense without any limitation as long as it has renewable energy sources and utilities that generate electrical consumption.

### CAPTION:

- **(FV) =** Photovoltaic panels
- **(CG) =** Sensor to detect total consumption of the building in real time;
- **(PF) =** Sensor to detect photovoltaic production of the building in real time;
- **(L) =** A household appliance (e.g. a washing machine) that can be controlled electronically remotely;
- **(C) =** A control unit that implements and executes the efficiency logics.

## Claims

1. A method for optimizing the electrical energy consumption coming from renewable sources (FV) in a dwelling in general, the method comprising the following steps:
- Determination of an electrical energy consumption in said dwelling in a predetermined time interval (0-t0) and based on historical data in said time interval;
- Determination of a production of energies from renewable sources present and in use in said dwelling in said predetermined time interval (0-t0) and based on historical data in said time interval;
- Entry, in a control unit, of one or more utilities (200, 300) present in the dwelling and of which to generate an activation and/or deactivation schedule in a period of time (T) subsequent to that of the determination of said historical data;
- Generation of said activation and/or deactivation schedule of said utilities in said predetermined time interval (T) subsequent to that (0-t0) of detection of the historical data, said activation and/or deactivation schedule being obtained as a function of at least:
- Said historical data of energy consumption and production;
- One or more forecast weather data relating to said time interval (T) in which to generate the activation and/or deactivation schedule;
- In such a way that said activation and/or deactivation schedule indicates, within said time interval (T), a series of times and/or time sub-intervals distributed in said time interval (T) in which to be able to activate and/or deactivate one or more of said entered utilities.

2. The method according to claim 1, wherein said utilities comprise one or more of the following:
- One or more air conditioning plants;
- One or more household appliances;

3. The method according to claim 1 or 2, wherein said historical determination of the electrical energy consumption is made through at least one sensor (CG) that measures in real time the consumption made and wherein, further, said historical determination of the production of energies from renewable sources is made with at least one sensor (PF) that measures in real time the energy produced.

4. The method according to claim 3, wherein said generation of the activation and/or deactivation schedule is carried out by a specific control unit that receives in input the data coming from said sensors (CG) and (PF) and said one or more forecast weather data, said control unit processing said data according to a specific function (f).

5. The method according to one or more of the preceding claims, wherein said generation of the activation and/or deactivation schedule is carried out by a specific control unit that receives in input the historical data of energy consumption and production and said one or more forecast weather data, said control unit processing according to specific function (f) said data in input, preferably the control unit being installed on site or, alternatively, being virtualizable in the cloud.

6. The method according to one or more of the preceding claims, wherein said generation of the activation and/or deactivation schedule provides for the entry of one or more utilities through a control panel communicating with the control unit or through a specific mobile device App, in particular in the case of a cloud control unit.

7. The method according to one or more of the preceding claims, wherein said schedule is visible on screen and indicates, based on the set time interval, time slot and relative day on which to activate and/or deactivate certain utilities.

8. The method according to one or more of the preceding claims, wherein said historical reference data are repeated continuously or at predetermined time intervals.

9. The method, according to one or more of the preceding claims, wherein from the function of historical data relatively to the consumption the consumption patterns relating only to the utilities entered in the control unit and whose schedule is to be generated are subtracted, said function overlapping with an energy production function dependent on the historical data of energy production and on the weather data in such a way as to generate, from said overlap of the two functions, said activation and/or deactivation schedule as a function of the energy surplus areas.

10. An assembly for optimizing the electrical energy consumption coming from renewable sources in a dwelling in general, said assembly comprising:
- At least one first sensor **(GC)** adapted to detect the energy consumptions in real time of the utilities set up in use in said dwelling;
- At least one second sensor (PF) adapted to detect in real time an energy production of renewable energy sources set up, in use, in said dwelling;
- A control unit communicating with said first and second sensor in such a way as to receive in input the data measured by said sensors, said control unit further receiving in input one or more weather data;
- And wherein the control unit is programmed to calculate, on the basis of said data received in input from the sensors, a historical reference data of electrical energy consumption and electrical energy production from renewable sources occurred in said predetermined time interval (0-t0) in which said data were acquired;
- And wherein said electronic control unit is further programmed to acquire in input one or more data relating to one or more utilities (200, 300) present, in use, in the dwelling and of which to generate an activation and/or deactivation schedule over time thereof;
- Said control unit being therefore programmed to generate said activation and/or deactivation schedule of said utilities in a time interval (T) subsequent to that (0-t0) of detection of the historical data, said activation and/or deactivation schedule being obtained as a function of:
- Said historical data of energy consumption and production;
- One or more forecast weather data relating to said time interval (T) in which to generate the activation and/or deactivation schedule;
- In such a way that said schedule indicates, within said time interval (T), a series of times and/or time sub-intervals distributed in said time interval (T) in which to be able to activate and/or deactivate one or more of said entered utilities.

11. The assembly according to claim 10, wherein the control unit estimates the times and/or the time sub-intervals in which it has been verified that there is an energy surplus and wherein, based on the calculated energy surplus and the consumptions of the entered utilities, it indicates in a report which utilities to activate and/or deactivate in the time interval.

12. The assembly according to claim 10 or 11, wherein the consumption patterns relatively only to the utilities entered in the control unit and whose schedule is to be generated are subtracted from the historical data function relatively to the consumption.
